# EUROPEAN PATENT APPLICATION

(11) **EP 1 600 635 A2**
(43) Date of publication of application: **30.11.2005**
(21) Application number: 05011388.5
(22) Date of filing: 25.05.2005
(51) Int. Cl.: F04C 2/10, F04C 2/08, F04C 15/00

(54) **Canned internal gear pump**

(30) Priority: 26.05.2004 JP 2004155676
(71) Applicant: Hitachi, Ltd., Tokyo 100-8280 (JP)
(72) Inventor: Kameya, Hirotaka, Hitachi, Ltd. IPG 12th Floor, Chiyoda-ku Tokyo 100-8220 (JP); Nakanashi, Masato Hitachi, Ltd. IPG 12th Floor, Chiyoda-ku Tokyo 100-8220 (JP)
(74) Representative: Beetz & Partner

(57) **Abstract**

The present invention aims to provide a motor-mounted internal gear pump that is small-sized, less expensive and has high reliability, while utilizing a function of an internal gear pump that is suitable for high head.

A motor-mounted internal gear pump has a pump section (81) for sucking and discharging a liquid and a motor section (82) for driving the same. The pump section (81) has an internal rotor (1) having teeth formed around its outer periphery, an external rotor (2) having teeth formed around its inner periphery and a pump casing that accommodates both rotors (1, 2) and has a suction port (8) for sucking a liquid and a discharge port (10) for discharging a liquid. The motor section (82) has a can (6) that composes a part of the pump casing and formed of a non-magnetic material into a thin plate, a rotator arranged at the inside of the can (6) for driving the external rotor or the internal rotor; and a stator (12) arranged at the outside of the can for rotating the rotator.

## Description

### FIELD OF THE INVENTION

The present invention relates to a motor-mounted internal gear pump and electronic device.

### BACKGROUND OF THE INVENTION

An internal gear pump has conventionally been well-known as a pump for delivering conveyed liquid against a pressure. Particularly, it has been popular as a hydraulic pump or oil pump.

An internal gear pump is composed, as main active components, of an internal rotor having teeth formed around the outer periphery and having a shape of a spur gear and an annular-shaped external rotor having teeth formed around the inner periphery and having a width generally same as that of the internal rotor. A casing having an inner flat face facing to both side faces of these rotors via a slight gap is provided so as to accommodate both rotors. The number of teeth of the internal rotor is generally less than the number of teeth of the external rotor by one. They rotate in the same way as a power transmission gear with both rotors meshed with each other. The liquid sealed in the tooth space is pumped and discharged by the change in the area of the tooth space with this rotation, thereby functioning as a pump. When one of internal and external rotors is driven, the other is rotated since they are meshed with each other. However, in most cases, a center shaft connected to the internal rotor is externally driven. The rotational centers of both rotors are shifted from each other, so that it is necessary to rotatably support each rotor. Formed at the flat inner face are at least one so-called suction port and one so-called discharge port that are opening sections to a flow channel communicating with the outside. The suction port is provided so as to oppose to the tooth space whose volume is increased, while the discharge port is provided so as to oppose to the tooth space whose volume is decreased. The popular tooth shape of the rotor is such that an arc is applied to a part of the tooth shape of the external rotor and a trochoid curve is applied to the tooth shape of the internal rotor.

Japanese Patent Laid-Open No. H11(1999)-50971 (Patent Reference 1) discloses a conventional pump wherein an internal gear pump mechanism and a motor for driving the same are integrally formed. In this conventional pump, the internal gear pump mechanism are arranged in parallel at the side face of the motor, wherein the internal gear pump mechanism is driven by a driving shaft of the motor.

### [Patent Reference]

Japanese Patent Laid-Open No. H11(1999) -50971

### SUMMARY OF THE INVENTION

The pump disclosed in the Patent Reference 1 has a problem that the entire size is increased, so that the pump is made large-sized, since the internal gear pump mechanism and the motor for driving the same are arranged in parallel in the shaft direction. Further, the driving shaft of the motor drives the internal gear pump mechanism, so that a shaft sealing device should be provided between the internal gear pump mechanism and the motor. Providing the shaft sealing device brings problems of increasing cost and deteriorating reliability due to its service life and leakage of a conveyed liquid. In case where the pump is used for an electronic device, in particular, it is important to prevent the leakage of the conveyed liquid, since a small amount of leakage may possibly entail a breakdown of the entire electronic device.

An object of the present invention is to provide a motor-mounted internal gear pump that is small-sized and less expensive and has high reliability, while utilizing a function of an internal gear pump that is suitable for high head, and an electronic device.

In order to attain the aforesaid object, the present invention provides a motor-mounted internal gear pump provided with a pump section for sucking and discharging a liquid and a motor section for driving the pump section, wherein the pump section comprises an internal rotor having teeth formed around the outer periphery; an external rotor having teeth, that are meshed with the teeth of the internal rotor, formed around the inner periphery; and a pump casing that accommodates both rotors and has a suction port for sucking a liquid and a discharge port for discharging a liquid, and the motor section comprises a can that composes a part of the pump casing and formed of a non-magnetic material into a thin plate; a rotator arranged at the inside of the can for driving the external rotor or the internal rotor; and a stator arranged at the outside of the can for rotating the rotator.

Specific preferable structures of the present invention are as follows.
(1) The rotator is made into a cylindrical shape and is fixedly disposed to the outer periphery of the external rotor so as to surround the outer periphery of the external rotor, the can is made into a thin cylindrical shape and surrounds the outer periphery of the rotator, and the stator is made into a cylindrical shape and arranged at the outside of the can.
(2) In the pump casing, the internal rotor is rotatably supported about a shaft that is fitted into its central hole, and the external rotor is fitted into an inner peripheral face of a bracket section that projects in the shaft direction.
(3) The bracket section is formed so as to project from both sides in the shaft direction, and the shoulder section of the pump casing arranged at both sides of the external rotor is fitted into the inner peripheral face of the bracket section projecting at both sides, whereby the external rotor is rotatably supported by the pump casing.
(4) The motor section is composed of a DC brushless motor whose rotator is made of a permanent magnet, and magnetism detecting means having a function of detecting the passage of the permanent magnet is provided at the outside of the can, wherein a current control device is provided for controlling the current supplied to the stator of the DC brushless motor based upon the output of the magnetism detecting means.
(5) The internal rotor and the external rotor are injection-molded from a synthetic resin material having a self-lubricating property, and the directions of drafts with this injection molding are reverse to each other in the state where both rotors are meshed with each other, wherein both rotors are meshed with each other such that the diameter of the internal tooth of the external rotor is increased in the direction in which the diameter of the external tooth of the internal rotor is increased.
(6) The space where the internal rotor and the external rotor are accommodated is isolated from the outside by the casing including the can, except for the flow channel passing through the suction port and the discharge port, wherein a flow channel is provided through which at least a part of the liquid in the suction or discharge paths flows via the inner space of the can.
(7) The current control device is thermally brought in close contact with the casing.
(8) A motor driving circuit provided with power consumption detecting means is incorporated, and a control function is provided, this control function performing an operation with a speed more increased than a normal rotational speed by a limited period in case where it is determined that the electric power consumption immediately after the activation is smaller than a predetermined value, and that changes the increased speed to the normal rotational speed in case where it is determined that the electric power consumption exceeds the predetermined value.
(9) THE motor-mounted internal gear pump according to claim 1, wherein the can is made of a non-magnetic member such as stainless steel or resin.

Further, the present invention provides an electronic device having mounted thereto a liquid cooling system provided with a motor-mounted internal gear pump claimed in any one of claims 1 to 10.

The present invention can provide a motor-mounted internal gear pump that is small-sized and less expensive and has high reliability, while utilizing a function of an internal gear pump that is suitable for high head, and an electronic device.

### BRIEF DESCRIPTION OF THE DRAWINGS

Fig. 1 is a longitudinal sectional view of a motor-mounted internal gear pump according to a first embodiment of the present invention;
Fig. 2 is a cross-sectional view of the motor-mounted internal gear pump of Fig. 1:
Fig. 3 is an exploded perspective view of a pump mechanism section in Fig. 1;
Fig. 4 is an explanatory view of an electronic device provided with a cooling system having the pump shown in Fig. 1;
Fig. 5 is a longitudinal sectional view of a motor-mounted internal gear pump according to a second embodiment of the present invention;
Fig. 6 is a longitudinal sectional view of a motor-mounted internal gear pump according to a third embodiment of the present invention; and
Fig. 7 is a longitudinal sectional view of a motor-mounted internal gear pump according to a fourth embodiment of the present invention.

### DESCRIPTION OF THE PREFERRED EMBODIMENT

Plural embodiments according to the present invention will be explained hereinafter with reference to the drawings. The same numerals in the figures of each embodiment represent the same or corresponding components.

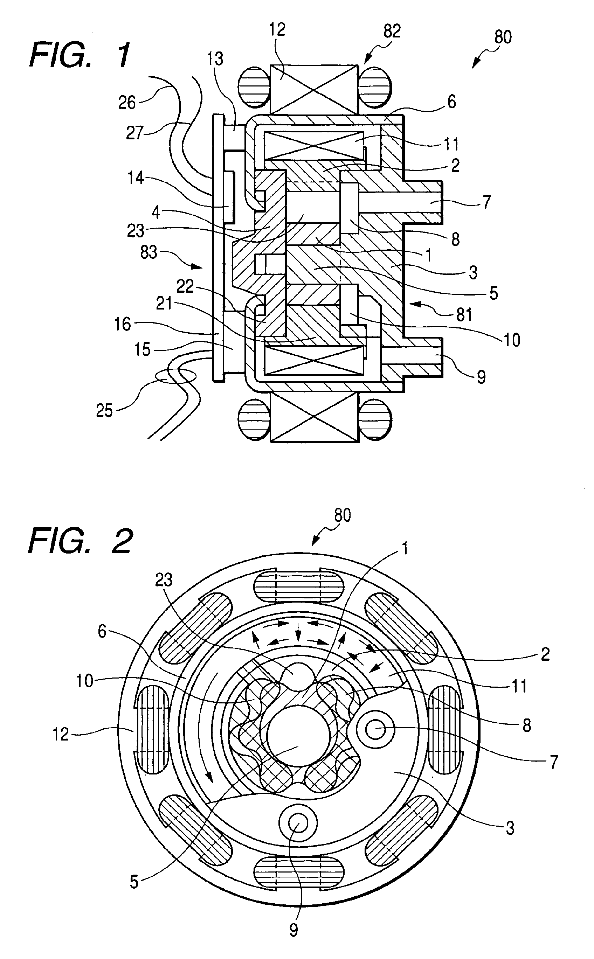

A motor-mounted internal gear pump and electronic device according to a first embodiment of the invention will be explained with reference to Figs. 1 to 4.

Firstly, the entire structure of the motor-mounted internal gear pump of this embodiment will be explained by using Figs. 1 and 2. Fig. 1 is a longitudinal sectional view of the motor-mounted internal gear pump according to the first embodiment of the present invention, while Fig. 2 is a cross-sectional view of the motor-mounted internal gear pump of Fig. 1.

A pump 80 is a motor-mounted internal gear pump provided with a pump section 81, motor section 82 and control section 83. The pump 80 is formed into a thin-sized shape wherein the size in the diameter direction is greater than the size in the widthwise direction.

The pump section 81 is provided with an internal rotor 1, external rotor 2, front plate 3, back plate 4, internal shaft 5 and can 6.

The internal rotor 1 has a shape similar to a spur gear, wherein teeth having a trochoidal curve as an outline are formed on its outer periphery. The tooth surface has, strictly speaking, a slight slope in the shaft direction that is called a so-called "draft" which assists the removal upon the injection molding. Further, the internal rotor 1 has a hole at its center that penetrates in the shaft direction and has a smooth inner face. Both side faces of the internal rotor 1 are finished to be flat and smooth, forming sliding faces with the front plate 3 and the back plate 4.

The external rotor 2 is formed into a ring shape, wherein the inwardly projecting section forms an outline of an arc and one more teeth than those of the internal rotor 1 are formed. Although the teeth of the external rotor 2 have generally the same sectional shapes in the shaft direction as a spur gear, they have a slight slope in the shaft direction, to be strictly speaking, that is called a so-called "draft" which assists the removal upon the injection molding. The directions of the slopes of the internal rotor 1 and the external rotor 2 are reverse to each other, wherein both rotors 1 and 2 are meshed with each other such that the diameter of the inner teeth of the external rotor 2 is increased in the direction in which the diameter of the outer teeth of the internal rotor 1 is increased. This prevents one-side contact at the meshing faces of both rotors 1 and 2. Both side end faces of the external rotor 2 are finished to be flat and smooth, forming sliding faces with the front plate 3 and the back plate 4. The external rotor 2 has generally the same width as that of the internal rotor 1. The external rotor 2 is arranged at the outer side of the internal rotor 1 such that both side end faces of the internal rotor 1 and the external rotor 2 generally agree with each other.

Each tooth space of the internal rotor 1 and the external rotor 2 are coupled to each other as engaged with each other, wherein the adjacent spaces independently form a closed working chamber 23.

Formed at the outer periphery section of the external rotor 2 are annular bracket sections 21 that project from both side end faces at the central section (end face generally equal to both side end faces of the internal rotor 1) in the shaft direction. The inner periphery of each bracket section 21 is finished into a smooth face. One of two bracket sections 21 is provided with a flange section projecting in the diameter direction. This flange section facilitates the positioning of a permanent magnet 11 and surely fixes this permanent magnet 11. The permanent magnet 11 composes a rotator of the motor section 82.

The internal rotor 1 and the external rotor 2 are obtained by forming a synthetic resin material having self-lubricating property and having a property wherein swelling deformation or corrosion due to water or solvent having water as a component can be neglected, such as polyacetal (POM), polyphenylene sulfide (PPS) or the like.

Fixed at the outer side of the external rotor 2 is the cylindrical permanent magnet 11 having a width generally the same as the width of the external rotor 2 including the bracket sections 21 in the shaft direction. The fixation may be carried out by a method having sufficient strength and reliability, such as adhesion or press fit. The permanent magnet 11 applies alternate polarities in the radius direction as shown by small arrows in Fig. 2, thereby providing a configuration wherein N-polarity and S-polarity are alternately arranged along the periphery when seen from the outer periphery side.

The external rotor 2 and the internal rotor 1 are composed such that they are rotated as sandwiched between the front plate 3 and the back plate 4 in the meshed state. The inner shaft 5 having a smooth outer periphery is fitted into a central hole of the internal rotor 1 with a slight gap, whereby the internal rotor 1 is rotatably supported by the inner shaft 5. The inner shaft 5 is injection-molded so as to be integral with the front plate 3, so that it does not rotate.

On the other hand, the inner peripheral surfaces of the bracket sections 21 of the external rotor 2 are fitted into outer periphery surfaces of shoulder sections of the front plate 3 and the back plate 4 with a slight gap, whereby both sides of the external rotor 2 are rotatably supported by the shoulder sections 22 of the front plate 3 and the back plate 4. The shoulder sections 22 of the front plate 3 and the back plate 4 have a positional relationship in which they are cut out from a part of the same cylinder. On the other hand, the inner shaft 5 has a diameter smaller than the shoulder sections 22 and located at an eccentric position. The inner shaft 5 has a function as a structural material for connecting the front plate 3 and the back plate 4, the leading end of which is fixed as inserted into a hole at the center of the back plate 4.

At the front plate 3, openings called a suction port 8 and a discharge port 10 are formed at the end face (inner face) opposite to the internal rotor 1 and the external rotor 2 with a slight gap. The suction port 8 and the discharge port 10 are formed by openings having their outline at the inner side from the root circle of the internal rotor 1 and at the outer side from the root circle (since the external rotor 2 is an external gear, the root diameter is greater than the tip diameter) of the external rotor 2. The suction port 8 is disposed so as to face toward the working chamber 23 whose volume is increased, while the discharge port 10 is disposed so as to face toward the working chamber 23 whose volume is decreased. Neither one of the ports faces toward the working chamber 23 whose volume becomes the maximum or a communication is established due to a small section between either one of the ports and the working chamber 23 whose volume becomes the maximum. The suction port 8 communicates with a suction opening 7 that is open to the outside via a short straight flow path. The discharge port 10 has a path directing from the discharge port 10 into an inner space covered by the can 6 in which the permanent magnet 11 rotates, whereby the discharge port 10 communicates with a discharge opening 9, which is open to the outside, via a flow path directing from the inner space to the discharge opening 9.

The motor section 82 is composed of the permanent magnet 11, stator 12 and can 6. The can 6 is shared by the pump section 81 and the motor section 82.

The thin plate-like can 6 that is a sealing member is disposed with a minute gap (e.g., a gap not more than 1 mm) between the permanent magnet 11 and the outer periphery. The permanent magnet 11 can be rotated with the external rotor 2. The can 6 is made of a non-magnetic member such as stainless steel or resin, and is formed of a thin plate member composed of a cylinder section and a bottom section. An opening section is formed at the center of the bottom section. Both ends of the can 6 are bonded in close contact with the vicinity of the outer periphery of the front plate 3 and the back plate 4, wherein the front plate 3, back plate 4 and can 6 form a space therein isolated from the outside. Specifically, the front plate 3, back plate 4 and can 6 compose a pump casing for forming the sealed space that accommodates the internal rotor 1, external rotor 2 and permanent magnet 11. This allows the conveyed liquid to be perfectly sealed in the pump casing, thereby being capable of preventing liquid spill by a movable section. Further, the can 6 composes a non-magnetic thin plate section of the motor section 82. It should be noted that the bonding method of both ends of the can 6 may be any methods so long as they have sufficient strength and reliability such as adhesion or press fit. Further, a structure wherein an O-ring or packing is used between them may be adopted in order to strengthen the sealing.

The stator 12 wound around an iron core of a comb teeth shape is fixedly mounted at the position that is at the outer side of the can 6 and that faces the permanent magnet 11. The motor section 82 composed of the permanent magnet 11 and the stator 12 is arranged at the outer peripheral side of the pump section 81 composed of the internal rotor 1 and the external rotor 2. This makes it possible to reduce the thickness of the pump 80 and miniaturize the pump 80.

The control section 83 is for controlling the motor section 82 and provided with an inverter electronic circuit for driving a DC brushless motor. Providing the motor section 82 at the outer peripheral side of the pump section 81 as described above makes it possible to dispose the control section 83 at the side face where the suction opening 7 or discharge opening 9 of the pump section 81 is not formed. In this embodiment, the control section 83 is disposed along the side face. From this viewpoint, the pump 80 can be miniaturized.

Plural (three) Hall elements 13 that are magnetism detecting means are disposed in close contact with the side face of the can 6 and a power element 15 that is a current control means is disposed in close contact with the side face of the can 6. These elements 13 and 15 and logic device 14 are soldered on the same electronic substrate 16 to compose the inverter circuit for driving the DC brushless motor. It is preferable that thermal conductive grease is applied between the power element 15 and the can 6 to enhance thermal adhesivity. Connected to the electronic substrate 16 are a power line 25 that supplies electric power from the outside, a control line 26 that instructs the rotation speed with a DC voltage and a rotation output line 27 that transmits the information about the rotation speed to the outside with a pulse.

The DC brushless motor is composed of the motor section 82 having the permanent magnet 11 and the stator 12 and the control section 83 having the inverter electronic circuit, wherein the permanent magnet 11 acts as a rotor of the DC brushless motor. A structure called a canned motor wherein the permanent magnet 11 is positioned at the inside of the can 6 that is the thin sealing member and the stator 12 is positioned at the outside of the can 6. The canned motor can transmit the rotating power by utilizing magnetic force without requiring a shaft sealing or the like, so that it is suitable for a structure of a positive-displacement pump that sends the conveyed liquid with the volume change in the working chamber 23 as the conveyed liquid is isolated from the outside.

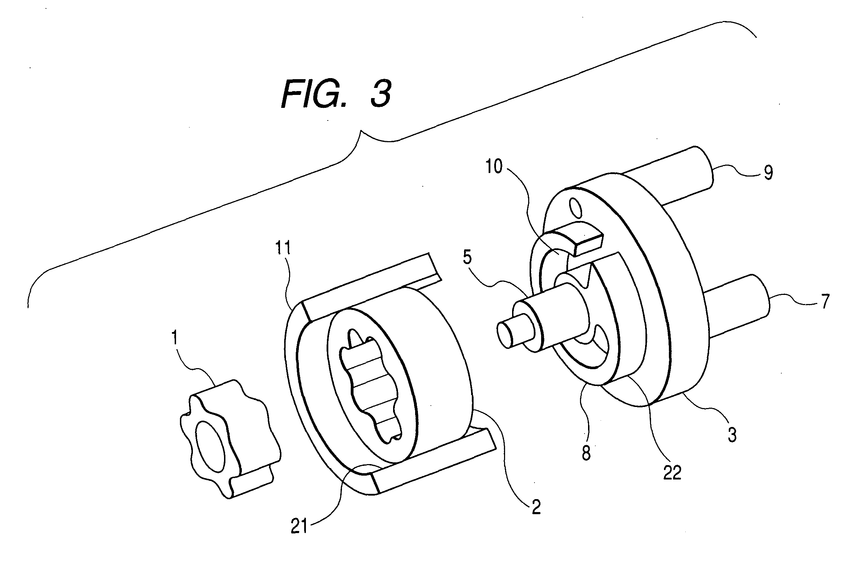

Subsequently, the positional relationship of the main components in the pump section 81 will be explained with reference to Fig. 3. Fig. 3 is an exploded perspective view of a pump mechanism of Fig. 1.

The internal rotor 1 is meshed with the external rotor 2 as inserted into the inner hole of the external rotor 2. The inner shaft 5 that is a part of the front plate 3 is inserted into the central round hole, whereby the internal rotor 1 is supported by the inner shaft 5. The external rotor 2 is formed so as to be integral with the cylindrical permanent magnet 11 that covers the outer periphery of the external rotor 2 including the bracket sections 21 at both ends. The inner peripheral faces of the bracket sections 21 are fitted with the shoulder sections 22, that are a part of the front plate 3 and the back plate 4, with a gap, thereby acting as a slide bearing. The external rotor 2 is thus supported at both ends by the front plate 3 and the back plate 4. The suction port 8 and the discharge port 10 are formed at the circular end face of the front plate 3 opposite to both rotors 1 and 2. The suction port 8 is directly coupled to the suction opening 7. The discharge port 10 is a section formed by cutting out a part of the shoulder section 22. It communicates with the internal space of the can 6, and a hole flow channel is provided that is open toward the discharge opening 9 from this space.

The operation of the pump 80 described above will be explained with reference to Figs. 1 to 3.

12 V of DC current is applied to the power line 25 for supplying electric current to the motor driving circuit of the control section 83, and DC voltage is applied to the control line 26 for transmitting a starting signal. This starting signal causes the control software installed in the logical device 14 to recognize a starting command, whereby electric current is sent to the stator 12 through the power element 16 by the instruction given by the logical device 14. This activates the motor section 82, whereupon three Hall elements 13 sense the magnetism and recognize the rotation angle of the permanent magnet 11. For this recognition, the Hall elements 13 are spaced at every one-third interval of the magnetic cycle of the permanent magnet 11. The logical device 14 determines the rotating phase of the permanent magnet 11 based upon the output signal from the Hall elements 13, and gives to the power element 16 an instruction about the amount and direction of the electric current transmitted to the stator 12, thereby controlling the motor section 82 with a designated rotation speed. Since the logical device 14 outputs the information about the rotation of the permanent magnet 11 as a pulse from the rotation output line 27, a host control device that receives this signal can confirm the operating state of the pump 80.

When the permanent magnet 11 is rotated, the external rotor 2 that is integral with the permanent magnet 11 is rotated and the internal rotor 1 meshed with the external rotor 2 is also rotated with the external rotor 2 due to the rotational transmission like a general internal gear. The working chamber 23 formed at the tooth space of two rotors 1 and 2 increases or decreases its volume due to the rotation of both rotors 1 and 2. The volume of the working chamber 23 becomes minimum at the lower end in Fig. 2 where the teeth of the internal rotor 1 and the external rotor 2 are meshed most deeply with each other, and it becomes maximum at the upper end in Fig. 2. Accordingly, when the rotors are rotated in the counterclockwise direction that is in the direction shown by a large arrow in Fig. 2, the right-half working chamber 23 increases its volume as upwardly moving, while the left-half working chamber 23 decreases its volume as downwardly moving. The sliding section that supports both rotors 1 and 2 is dipped into the conveyed liquid, so that the friction is small and the abnormal abrasion can also be prevented.

The conveyed liquid is sucked from the suction opening 7 via the suction port 8 into the working chamber 23 whose volume is increasing. The working chamber 23 having the maximum volume finishes the suction as shifted from the outline of the suction port 8 due to the rotation of the rotor, and then, is communicated with the discharge port 10. From this point, the volume of the working chamber 23 is changed to be decreased, whereby the conveyed liquid in the working chamber 23 is discharged from the discharge port 10. The discharged conveyed liquid enters the space in the can 6, returns to the channel of the front plate 3 from this space after the permanent magnet 11 is cooled, and then, discharged to the outside from the discharge opening 9.

In this embodiment, the suction channel is short, so that the negative pressure upon the suction is small, thereby being capable of preventing the occurrence of cavitation phenomena. Further, relatively high discharge pressure is applied to the inside of the can 6, this pressure acting in the direction for outwardly extending the can 6. This makes it possible to avoid that the can 6 is inwardly deformed to be in contact with the permanent magnet 11 that is a rotating member, even if the can 6 is thin.

The heat in the power element 15 that is generated due to the operation and should be cooled passes through the thermal conductive grease and can 6, transferred to the conveyed liquid flowing through the can 6, and then, discharged to the outside. Since the conveyed liquid in the can 6 is always stirred as it is in the path of the discharge channel, the heat can effectively be removed. Accordingly, a heat sink or cooling fan exclusive for the power element 15 is not needed. Further, the heat generated at the permanent magnet 11 or the stator 12 due to the motor loss is similarly removed, thereby abnormal temperature rise can be prevented.

The inside of the stator 12 is generally positioned concentrically with the outer periphery of the permanent magnet 11, wherein its space is uniform. However, considering the internal pressure distribution of the pump section 81, the working chamber 23 communicating with the discharge port 10 has the internal pressure higher than that of the working chamber 23 communicating with the suction port 8, whereby the external rotor 2 receives liquid force in the leftward direction in Fig. 2. In view of this, the stator 12 is made slightly eccentric in the leftward direction in Fig. 2 for offsetting the liquid force by rightward magnetic attraction force (motor pull), with the result that the force in the diameter direction acting on the external rotor 2 is reduced. Moreover, this can be utilized for reducing the friction loss and preventing the abrasion.

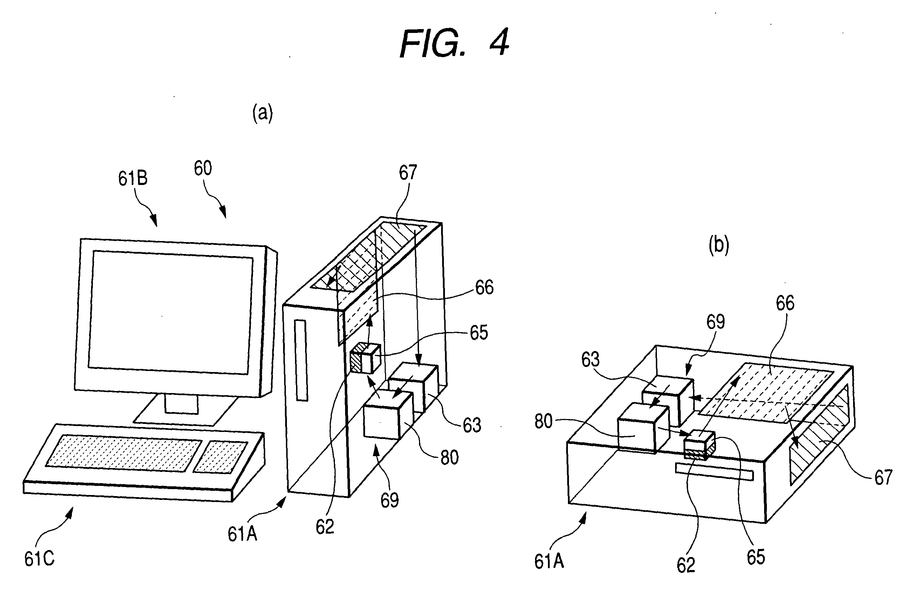

Subsequently, an electronic device having the aforesaid pump 80 will be explained with reference to Fig. 4. Fig. 4(a) is a perspective view wherein a main body of a personal computer is vertically placed, while Fig. 4(b) is a perspective view showing only the main body of the personal computer that is laterally placed. Fig. 4 shows the case where the electronic device is a desk-top personal computer.

A personal computer 60 is composed of a main body 61A of the personal computer, display device 61B and keyboard 61C. A liquid cooling system 69 is incorporated in the main body 61A with a CPU (central processing unit) 62, and is composed of a closed loop system wherein a reservoir 63, pump 80, heat exchanger 65, heat dissipating plate A66 and heat dissipating plate B67 are connected in this order with a pipeline. The object for disposing this liquid cooling system 69 is mainly to transport the heat, that is generated in the CPU 62 incorporated into the main body 61A, to the outside for keeping the temperature rise of the CPU 61 to be not more than a specified value. The liquid cooling system 69 that uses, as a heating medium, water or solution including water as a main component has high heat transporting ability and has reduced noise, compared to an air cooling system, thus preferable for cooling the CPU 62 having high calorific value.

The conveyed liquid and air are sealed in the reservoir 63. The reservoir 63 and the pump 80 are juxtaposed, wherein the outlet of the reservoir 63 and the suction opening of the pump 80 are communicated with each other by a pipeline. The heat exchanger 65 is disposed in close contact with the heat dissipating face of the CPU 62 via the thermal conductive grease. The discharge opening of the pump 80 and an inlet of the heat exchanger 65 are communicated with each other by a pipeline. The heat exchanger 65 is communicated with the heat dissipating plate A66 by a pipeline, the heat dissipating plate A66 is communicated with the heat dissipating plate B67 by a pipeline, and the heat dissipating plate B67 is communicated with the reservoir 63 via a pipeline. The heat dissipating plate A66 and the heat dissipating plate B67 are disposed such that heat is dissipated to the outside from a different face of the main body 61A.

The power line 25 is drawn from a DC 12V power source that is normally provided in the personal computer 60, while the control line 26 and the rotation output line 27 are connected to the electronic circuit of the personal computer 60 that is the host control device.

The operation of this liquid cooling system 69 will be explained. Power and starting instruction are transmitted with the starting of the personal computer 60, whereby the pump 80 is activated and the conveyed liquid starts circulating. The conveyed liquid is sucked from the reservoir 63 to the pump 80, pressurized by the pump 80, and then, sent to the heat exchanger 65. The conveyed liquid sent from the pump 80 to the heat exchanger 65 absorbs the heat generated in the CPU 62, so that the temperature of the conveyed liquid rises. Further, the conveyed liquid is heat-exchanged with open air at the heat dissipating plate A66 and the heat dissipating plate B67 (heat is dissipated into the open air), whereby the temperature of the conveyed liquid is reduced. Then, the conveyed liquid is returned to the reservoir 63. The cooling of the CPU 62 is continuously carried out by repeating this operation.

Since the pump 80 is an internal gear that is one type of a positive-displacement pump, it has a capability of bringing the suction opening into a negative pressure state even if it is activated in a dry state (liquid-free condition). Accordingly, it has a self-priming capability for pumping liquid without a priming even if the liquid is pumped via a pipeline that is positioned higher than the liquid level in the reservoir 63 or even if the pump 80 is positioned higher than the liquid level. Further, the internal gear pump 80 has a pressure capability higher than a centrifugal pump, so that it is applicable to a condition where passage pressure loss is increased through the heat exchanger 65 and heat dissipating plates 66 and 67. In case where the heat generation density of the CPU 62 is high, in particular, it is required that the flow channel in the heat exchanger 65 is made slender and long as bent in order to enlarge the heat-exchanging area. Therefore, a liquid cooling system using a centrifugal pump is difficult to be applied to a condition where the pressure loss due to the pass is increased. On the other hand, the liquid cooling system 69 according to this embodiment can cope with this condition.

In the liquid cooling system 69 in this embodiment, the temperature of the conveyed liquid is decreased via the heat dissipating plates 66 and 67 immediately after the outlet of the heat exchanger 65 where the conveyed liquid has the highest temperature, whereby the temperature at the reservoir 63 and the pump 80 can be kept to be relatively low. Accordingly, the internal components of the pump 80 are easy to secure reliability compared to the high-temperature environment.

The temperature at each section, through which the liquid is circulated, is determined as a result of the operation of the liquid cooling system 69. Each temperature is monitored by a temperature sensor (not shown). In the case where the lack of the cooling capability due to the temperature rise not less than a specified value is confirmed, instruction is given for increasing the rotational speed of the pump 80, thereby preventing beforehand the excessive temperature rise. In the case where the excessive cooling is performed, the rotational speed is restrained. The rotational output transmitted from the pump 80 is always monitored. When the rotational speed is broken off and the change in the liquid temperature is abnormal, it is determined that something is wrong with the pump 80, so that the personal computer 60 is brought into an emergency operation. In the emergency operation, a fatal damage on a hardware is prevented after the minimal operation is performed such as decreasing the CPU speed, storing the program being operated, or the like.

There is no problem when the pump 80 is positioned lower than the reservoir 63. However, there may be a case where the pump 80 is designed to be positioned higher than the reservoir 63. In this case, the liquid in the pump 80 may flow out due to the long-time stop, and hence, the inside of the pump 80 may be dried. In this case, the pump 80 has no liquid immediately after the activation and operates as a pump for delivering air, which means that the pump 80 can perform a general operation only after air is vented and the liquid is filled therein. However, the pump 80 designed as the liquid pump is unsuitable for venting air.

In view of this, this embodiment has amotor driving circuit provided with power consumption detecting means incorporated therein and has a control function that performs an operation with a speed more increased than a normal rotational speed by a limited period in the case where it is determined that the electric power consumption immediately after the activation is smaller than a predetermined value, and that changes the increased speed to the normal rotational speed in the case where it is determined that the electric power consumption exceeds the predetermined value, in order to remove air in a short period of time for ensuring smooth activation, even if the pump 80 is positioned higher than the reservoir 63 and the inside of the pump is dried after the long-time stop.

The longest period for the operation with increased speed is determined. The case where the liquid is not conveyed even at this longest period means abnormality such as the breakdown of the pump 80 or scattering of the liquid. In this case, the pump 80 is stopped and the occurrence of the abnormality is transmitted to the host control function.

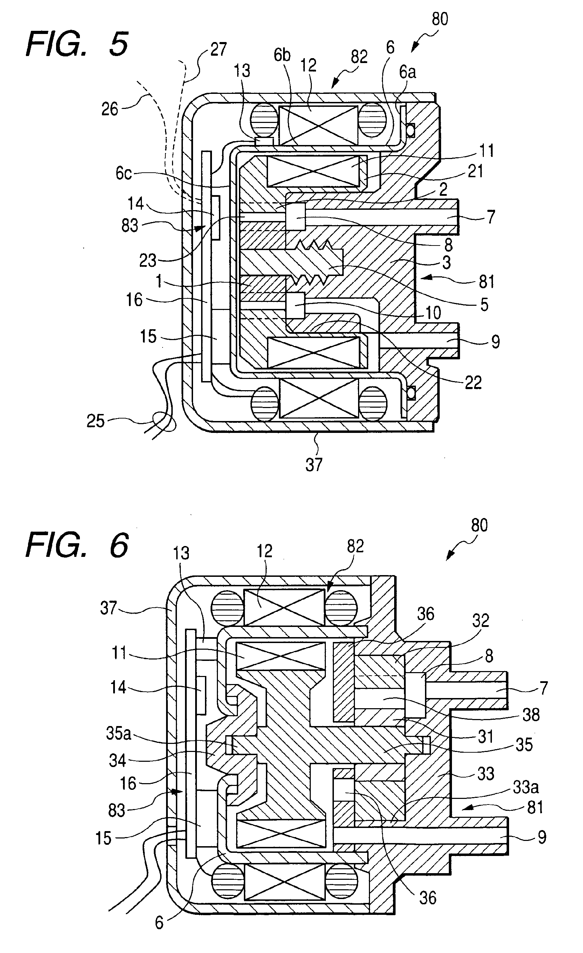

The aforesaid liquid cooling system 69 operates in the same way even in the case where the main body 61A of the personal computer is vertically arranged as shown in Fig. 6(a) or in the case where the main body 61A is laterally arranged as shown in Fig. 6(b), so that the liquid cooling system 69 does not hinder the degree of freedom in the arrangement of the main body 61A of the personal computer. Two heat dissipating plates A66 and B67 can be alternately arranged horizontally and vertically in either of the vertical arrangement and the lateral arrangement, whereby the heat dissipating trouble can be prevented such as the case where both heat dissipating plates are simultaneously covered.

Subsequently, a second embodiment of the present invention will be explained with reference to Fig. 5. Fig. 5 is a longitudinal sectional view of a motor-mounted internal gear pump according to the second embodiment of the present invention. This second embodiment is different from the first embodiment in the points described below, but the others are basically the same as the first embodiment.

In this second embodiment, the permanent magnet 11 and the stator 12 are arranged so as to be close to one side in the shaft direction with respect to the internal and external rotors 1 and 2. The bracket section 21 is provided so as to project at only one side of the outer peripheral section of the external rotor 2. The permanent magnet 11 is arranged at the outside of the bracket section 21, and the stator 12 is arranged at the outside of the permanent magnet 11. The external rotor 2 is supported only by the shoulder section 22 of the front plate 3 via the bracket section 21. The internal rotor 1 is supported by the shaft 5 embedded into (i.e., integrally molded with) the front plate 3.

The can 6 is composed of the flange section 6a, cylindrical section 6b and bottom section 6c, wherein the bottom section 6c serves as the back plate 4 in the first embodiment. Accordingly, the pump casing is composed of two components, i.e., the front plate 3 and the can 6. Further, a cover 37 is provided at the front plate 3 so as to cover the pump section 81, motor section 82 and control section 83.

The second embodiment eliminates a deficiency due to the difference in the degree of concentricity between the left and right bearings of the external rotor 2, compared to the first embodiment. Further, the back plate 4 in the first embodiment is unnecessary, which means the number of components can be reduced by one, thereby cost can be reduced. Moreover, the precision standard of the pump 80 can be aggregated only on the front plate 3, thereby facilitating the precision management. The shaft-support position is on the flux line even in the case where there is unbalanced electromagnetic force due to the eccentric motor, thereby such a state can be coped with. The noise insulation performance of the cover 37 can prevent that the meshing noise generated by the rotors 1 and 2 and the electromagnetic noise generated by the stator 12 are externally spread out. Further, the cover 37 is solid-bonded only at the position away from the sound source or vibration source, so that the solid borne sound is liable to attenuate on its way, thereby being difficult to be diffused. Since the heat generation of the motor or device is transferred to the conveyed liquid via the can 6, the temperature rise in the noiseproof cover is limitative, thus no problems are caused.

Subsequently, a third embodiment of the present invention will be explained with reference to Fig. 6. Fig. 6 is a longitudinal sectional view of a motor-mounted internal gear pump according to the third embodiment of the invention. This third embodiment is different from the first embodiment in the points described below, but the others are basically the same as the first embodiment.

An internal rotor 31 and an external rotor 32 have the same widths and form a pair of internal gears. They are accommodated in a cylindrical opening 33a formed at a front plate 33 in a meshed state. The cylindrical opening 33a has a depth slightly greater than each width of both rotors 31 and 32, and has a minute gap between both rotors 31 and 32 in the diameter direction and widthwise direction. The suction port 8 is provided at the bottom face of the cylindrical opening 33a. The suction port 8 is directly connected to the suction opening 7.

A driving shaft 35 is inserted to be fixed into a central hole of the internal rotor 31. Small-diameter sections 35a provided at both ends of the driving shaft 35 are inserted into each hole provided at the front plate 33 and the back plate 34, wherein they are rotatably supported as a slide bearing. The driving shaft 35 is concentric with the internal rotor 31, while the outer periphery of the external rotor 32 and the cylindrical opening 33a with which the external rotor 32 comes in contact are eccentric.

As described above, the structure of the third embodiment is that the internal rotor 31 is integrally supported by the shaft 35 at both ends and the external rotor 32 has the outer periphery and end face serving as a slide bearing. This structure is popular in a conventional internal gear pump, having long-period achievements and high reliability.

A partition plate 36 has a plane shape with a central opening. The driving shaft 35 penetrates through this central opening. The partition plate 36 covers the end face at one side of both rotors 31 and 32, and its peripheral section is fixed so as to be in close contact with the front plate 33. Formed at the partition hole 36 are a discharge port 36a that is a through-hole having a predetermined outline shape and also a flow channel communicating with the discharge opening 9.

The permanent magnet 11 is fixedly provided at the outer periphery of the driving shaft 35, where the diameter is increased, at the side opposite to both rotors 31 and 32 with respect to the partition plate 36, thereby composing a rotor of the motor.

The outer periphery of the front plate 33, which is increased in the diameter direction, is joined to the cover 37. The cover 37 covers the outside of the stator 12 and the substrate 16, and has a small hole through which any kind of electric wires pass.

In this third embodiment, when the pump 80 is activated, torque is generated on the permanent magnet 11 due to the action of the motor, whereby the internal rotor 31 coupled with the driving shaft 35 and the external rotor 32 meshed with the internal rotor 31 are rotated. The conveyed liquid entering from the suction opening 7 is sucked into the working chamber 38, whose volume is now increasing, via the suction port 8, from the principle of the internal gear pump. On the other hand, the conveyed liquid is discharged into the internal space of the can 6 via the discharge port from the working chamber 38 whose volume is now decreasing. Further, the conveyed liquid is discharged to the outside through the holes formed on the partition plate 36 and the front plate 33.

Although the size of the entire pump becomes longer than that of the first embodiment, the third embodiment adopts a proven system on the shaft-support of both internal and external rotors 31 and 32, thereby being capable of realizing high reliability. The noise insulation performance of the cover 37 can prevent that the meshing noise generated by the rotors 31 and 32 and the electromagnetic noise generated by the stator 12 are externally spread out. Further, the cover 37 is solid-bonded only at the position away from the sound source or vibration source, so that the solid borne sound is liable to attenuate on its way, thereby being difficult to be diffused. Since the heat generation of the motor or device is transferred to the conveyed liquid via the can 6, the temperature rise in the noiseproof cover is limitative, thus no problem are caused.

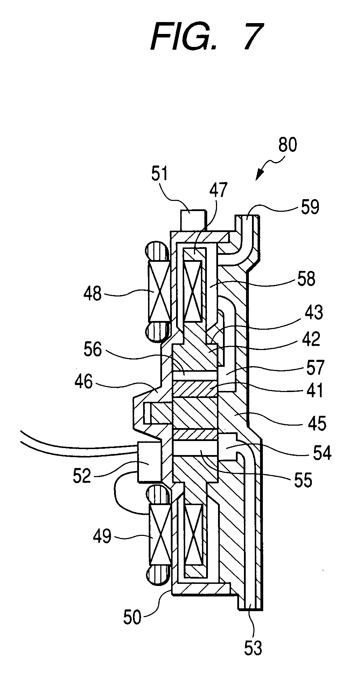

Subsequently, a fourth embodiment of the present invention will be explained with reference to Fig. 7. Fig. 7 is a longitudinal sectional view of a motor-mounted internal gear pump according to the third embodiment of the invention. This fourth embodiment is different from the first embodiment in the points described below, but the others are basically the same as the first embodiment.

The outer periphery section of an external rotor 42 meshed with an internal rotor 41 extends, all around the circumference, in the diameter direction with a width narrower than that of the section where teeth are formed, thereby providing a shape in which a disk is fixed on the outer periphery of the external rotor in the conventional example. A step 43 where the width of the external rotor 42 is decreased is fitted, with a minute gap, into a step formed at the inner face of a front plate 45 and a back plate 46, thereby functioning as a slide bearing. A permanent magnet 48 is embedded into an extending section 47 of the external rotor 42 toward the outer periphery, wherein the polarities of the permanent magnet 47 are alternately arranged in the circumferential direction.

A stator 49 is provided in the shaft direction with respect to the permanent magnet 48 via a slight gap and a thin can 50 made of a non-magnetic material. The stator 49 may have a structure of a sheet coil or the like not using a winding. The can 50 is integral with the back plate 46. A Hall element 51 is brought into close contact with the outer edge section of the can 50 that corresponds to the diameter direction of the permanent magnet 11, while a power element 52 is brought into close contact with the back plate 46.

In this fourth embodiment, the conveyed liquid is sucked from a suction opening 53 formed in the diameter direction into a working chamber 55, whose volume is increasing, via a suction port 54. Then, the conveyed liquid is discharged from a working chamber, whose volume is decreasing, to the outside from a discharge opening 59 via a discharge port 57 and an internal space 58 of the can.

This fourth embodiment can make the entire pump extremely thin, thereby providing excellent housing performance. Since the direction of each of the suction opening and discharge opening can be freely designed, this pump can be incorporated into another device with relatively free layout. Further, it is possible to successively laminate the components from one side upon assembling, thereby providing satisfactory assembility.

Since the pump 80 according to each of the aforesaid embodiment is small-sized and has high reliability, it is suitable for use as a liquid conveying means in a coolant circulating circuit for cooling the inside of an electronic device involved with a high density heat generation, represented, for example, by a personal computer.
Of course, details of the structures of the above described embodiments may be combined in different manners for providing further embodiments optimized for a particular application.

## Claims

1. A motor-mounted internal gear pump provided with a pump section (81) for sucking and discharging a liquid and a motor section (82) for driving the pump section (81), wherein the pump section (81) comprises:
an internal rotor (1) having teeth formed around the outer periphery;
an external rotor (2) having teeth, that are meshed with the teeth of the internal rotor, formed around the inner periphery; and
a pump casing that accommodates both rotors (1, 2) and has a suction port (8) for sucking a liquid and a discharge port (10) for discharging a liquid, and
the motor section (82) comprises:
a can (6) that composes a part of the pump casing and formed of a non-magnetic material into a thin plate;
a rotator arranged at the inside of the can (6) for driving the external rotor (2) or the internal rotor (1); and
a stator (12) arranged at the outside of the can for rotating the rotator.

2. The motor-mounted internal gear pump according to claim 1, wherein the rotator is made into a cylindrical shape and is fixedly disposed to the outer periphery of the external rotor (2) so as to surround the outer periphery of the external rotor (2), the can is made into a thin cylindrical shape and surrounds the outer periphery of the rotator, and the stator (12) is made into a cylindrical shape and arranged at the outside of the can (6).

3. Motor-mounted internal gear pump according to claim 1 or 2, wherein the internal rotor (1) is rotatably supported about a shaft (5) that is fitted into its central hole, and the external rotor (2) is rotatably supported by a part of the pump casing in which the external rotor (2) is fitted into an inner peripheral face of a bracket section (21) that projects in the shaft direction, whereby the rotator is fixed to the external rotor (2).

4. Motor-mounted internal gear pump according to claim 3, wherein the bracket section (21) is formed at both sides so as to project in the shaft direction, and the shoulder section (22) of the pump casing arranged at both sides of the external rotor (2) is fitted into the inner peripheral face of the bracket section (21) projecting at both sides, whereby the external rotor (2) is rotatably supported by the pump casing.

5. Motor-mounted internal gear pump according to any of the preceding claims, wherein the motor section (82) is composed of a DC brushless motor whose rotator is made of a permanent magnet (11), and magnetism detecting means (13) having a function of detecting the passage of the permanent magnet (11) is provided at the outside of the can (6), wherein a current control device is provided for controlling the current supplied to the stator of the DC brushless motor based upon the output of the magnetism detecting means (13).

6. Motor-mounted internal gear pump according to any of the preceding claims, wherein the internal rotor (1) and the external rotor (2) are injection-molded from a synthetic resin material having a self-lubricating property, and the directions of drafts with this injection molding are reverse to each other in the state where both rotors (1, 2) are meshed with each other, wherein both rotors (1, 2) are meshed with each other such that the diameter of the internal tooth of the external rotor (2) is increased in the direction in which the diameter of the external tooth of the internal rotor (1) is increased.

7. Motor-mounted internal gear pump according to any of the preceding claims, wherein the space where the internal rotor (1) and the external rotor (2) are accommodated is isolated from the outside by the casing including the can (6), except for the flow channel passing through the suction port (8) and the discharge port (10), wherein a flow channel is provided through which at least a part of the liquid in the suction or discharge paths flows via the inner space of the can (6).

8. Motor-mounted internal gear pump according to any of the preceding claims, wherein the current control device is thermally brought in close contact with the casing.

9. Motor-mounted internal gear pump according to any of the preceding claims, wherein a motor driving circuit provided with a power consumption detecting means is incorporated, and a control function is provided, this control function performing an operation with a speed more increased than a normal rotational speed by a limited period in case where it is determined that the electric power consumption immediately after the activation is smaller than a predetermined value, and that changes the increased speed to the normal rotational speed in case where it is determined that the electric power consumption exceeds the predetermined value.

10. Motor-mounted internal gear pump according to any of the preceding claims, wherein the can (6) is made of a non-magnetic member such as stainless steel or resin.

11. An electronic device having mounted thereto a liquid cooling system provided with a motor-mounted internal gear pump according to any one of claims 1 to 9.
